## Europäisches Patentamt

## European Patent Office

## Office européen des brevets

(19)

(11) Veröffentlichungsnummer: **0 219 044 B1**

(12) **EUROPÄISCHE PATENTSCHRIFT**

(45) Veröffentlichungstag der Patentschrift:
31.01.90

(21) Anmeldenummer: **86113877.4**

(22) Anmeldetag: **07.10.86**

(51) Int. Cl.⁴: **C09B 5/26**

(54) **Küpenfarbstoffe auf der Basis von Fluoranthen und Verfahren zu deren Herstellung.**

(30) Priorität: **11.10.85 DE 3536259**

(43) Veröffentlichungstag der Anmeldung:
**22.04.87 Patentblatt 87/17**

(45) Bekanntmachung des Hinweises auf die Patenterteilung:
**31.01.90 Patentblatt 90/5**

(84) Benannte Vertragsstaaten:
**CH DE FR GB IT LI**

(56) Entgegenhaltungen:
**US-A- 2 219 707**

(73) Patentinhaber: **BASF Aktiengesellschaft,
Carl-Bosch-Strasse 38, D-6700 Ludwigshafen(DE)**

(72) Erfinder: **Patsch, Manfred, Dr., Fritz-Wendel-Strasse 4,
D-6706 Wachenheim(DE)**
Erfinder: **Epple, Gerhard, Dr., Am Mahlstein 3,
D-6719 Weisenheim(DE)**
Erfinder: **Flohr, Helmut, Dr., Bleichstrasse 92,
D-6500 Mainz 1(DE)**
Erfinder: **Degen, Helmut, Wildstrasse 32,
D-6710 Frankenthal(DE)**
Erfinder: **Nahr, Uwe, Dr., Ginsterstrasse 17,
D-6704 Mutterstadt(DE)**

## Beschreibung

Die Erfindung betrifft Küpenfarbstoffe auf der Basis von kondensierten Umsetzungsprodukten von Monobromfluoranthen, das höchstens 7 % Dibromfluoranthen enthält, mit 1-Amino-4-benzoylaminoanthrachinon, die dadurch erhältlich sind, daß man die Kondensation der Umsetzungsprodukte zu den carbazolierten Verbindungen bei 50 bis 70 °C in 83- bis 88 %iger Schwefelsäure vornimmt und nach der Carbazolierung noch bis zu einem Bromgehalt von 20 bis 23 Gew.-% nachbromiert.

Aus der Patentschrift US 2 219 707, Beispiel 2, ist bekannt, daß durch Behandlung eines Anthrimids aus Bromfluoranthen und 1-Amino-4-benzoylaminoanthrachinon mit konz. Schwefelsäure ein Küpenfarbstoff entsteht, der Baumwolle in einem gelboliven Farbton färbt. Die erfindungsgemäßen Farbstoffe zeichnen sich demgegenüber dadurch aus, daß sie Cellulosematerial in klareren gelbstichigen Olivtönen färben und deutliche Vorteile in der Sodakochechtheit und Hypochloritechtheit zeigen.

Die erfindungsgemäßen Farbstoffe werden aus Fluoranthen in einer 4-stufigen Synthese hergestellt, wobei zweckmäßigerweise die Stufen 1 und 2 sowie 3 und 4 zusammengefaßt werden:

1. Bromierung von Fluoranthen,
2. Anthrimidbildung durch Umsetzung von Bromfluoranthen mit 1-Amino-4-benzoylaminoanthrachinon,
3. Carbazolierung in Schwefelsäure,
4. Bromierung der carbazolierten Verbindung.

Die Bromierung von Fluoranthen zum Monobromfluoranthen, das höchstens 7 % des Dibromderivats enthält, erfolgt zweckmäßigerweise in der 7- bis 20-fachen Menge Nitrobenzol bei 0 bis 30 °C, vorzugsweise 15 bis 25 °C. Als Bromierungsmittel wird elementares Brom als 20 bis 27 %ige Lösung in Nitrobenzol oder eine wäßrige Natriumbromid-Natriumbromatlösung verwendet. Bei Verwendung von Brom wird die Bromlösung in 4 bis 10 Stunden zur Fluoranthenlösung zugetropft. Wird dagegen mit Bromid-Bromatlösung halogeniert, so wird die wäßrige Salzlösung auf einmal zugegeben. Anschließend wird die theoretisch erforderliche Menge Säure in Form einer ca. 20 %igen Schwefelsäure in 4 bis 10 Stunden zugetropft. Pro Mol Fluoranthen werden 0,95 bis 1,25 Mol Brom oder 0,62 bis 0,83 Mol Natriumbromid und 0,30 bis 0,42 Mol Natriumbromat eingesetzt. Das Reaktionsprodukt wird vorzugsweise ohne Isolierung für die Herstellung der Anthrimide verwendet, die durch Umsetzung der Bromfluoranthene mit 1-Amino-4-benzoylaminoanthrachinon in an sich bekannter Weise erhalten werden.

Erfindungsgemäß wird die Carbazolierung der Anthrimide in der Weise durchgeführt, daß man das getrocknete Produkt bei 20 bis 25 °C unter Rühren in die 10- bis 25-fache, vorzugsweise 20-fache Menge einer 83 bis 88 %igen, vorzugsweise 84 bis 86 %igen, Schwefelsäure einträgt, auf ungefähr 60 °C erwärmt und 2 bis 4 Stunden bei dieser Temperatur rührt.

Zur Nachbromierung der carbazolierten Verbindung wird die Reaktionsschmelze wieder auf 20 bis 25 °C abgekühlt und innerhalb von 2 Stunden mit so viel Brom versetzt, daß der Farbstoff 20 bis 23 Gew.-% an Brom enthält. Nach beendeter Bromzugabe rührt man 6 bis 20 Stunden, vorzugsweise 12 bis 14 Stunden nach. Zur Isolierung wird das Reaktionsprodukt auf Wasser gegossen, der ausgefallene Farbstoff abgesaugt und mit Wasser gewaschen.

Die folgenden Beispiele sollen die Erfindung weiter erläutern.

Beispiel 1

a) Herstellung des Anthrimids

1200 g Nitrobenzol werden mit 160 g (0,75 Mol) Fluoranthen (95 %ig) versetzt. Nach Zugabe von 300 g Wasser werden nacheinander 56 g (0,54 Mol) Natriumbromid und 41 g (0,27 Mol) Natriumbromat eingefüllt und 0,5 Stunden bei 20 bis 25 °C gerührt. Unter gutem Rühren werden bei 20 bis 22 °C unter Kühlung in 7 bis 8 Stunden kontinuierlich 156 ml 22,5 %ige Schwefelsäure zugetropft. Nach beendetem Zutropfen wird 12 h nachgerührt und das Reaktionsgemisch gaschromatographisch analysiert. Zusammensetzung: Fluoranthen 9,7 %, Monobromfluoranthen 84 %, Dibromfluoranthen 5,5 % (Flächenprozente). Nach Abtrennen der wäßrigen Phase wird die Nitrobenzolphase mit 150 g Soda calc., 230 g (0,67 Mol) 1-Amino-4-benzoylaminoanthrachinon (ber. 100 %) und 5 g Kupferoxid versetzt. Das Reaktionsgemisch wird 7 bis 8 Stunden auf 190 bis 200 °C erhitzt, bis das Dünnschichtchromatogramm einer entnommenen Probe nur noch Spuren an 1-Amino-4-benzoylaminoanthrachinon aufzeigt. Das Lösungsmittel wird im Vakuum abgedampft, der Rückstand mit 300 g Wasser und 0,5 g eines handelsüblichen Netzmittels versetzt, 2 h bei 80 °C gerührt, das ausgefallene Reaktionsprodukt abgesaugt, mit warmem Wasser salzfrei und neutral gewaschen und getrocknet. Es wurden 390 g Anthrimid erhalten.

b) Herstellung des Farbstoffs

Im 20 l-Emaillekessel werden 15,60 kg Wasser und 13,45 kg 96 %ige Schwefelsäure vorgelegt und unter Rühren portionsweise bei 20 bis 25 °C 1,50 kg Anthrimid [siehe a)] in 2 bis 3 Stunden eingetragen. Innerhalb von 0,5 Stunden wird auf 60 °C erwärmt und 2,5 Stunden bei 60 bis 65 °C gerührt. Nach dem Abkühlen des Reaktionsgemisches auf Raumtemperatur werden in 2 Stunden bei 20 bis 25 °C 0,97 kg Brom zugetropft. Nach 14 stündigem Rühren bei dieser Temperatur gibt man das Reaktionsgemisch in eine Mischung aus 22 kg Wasser, 14 kg Eis und 0,04 kg Natriumsulfit. Man rührt 1 Stunde bei 20 bis 25 °C nach, saugt das ausgefallene Reaktionsprodukt ab und wäscht mit heißem Wasser neutral. Die Ausbeute an getrocknetem Farbstoff beträgt 1,90 kg. Der Farbstoff färbt Cellulosematerial aus der Küpe in einem klaren gelbstichigen Olivton.

## Beispiel 2

213 g (1 Mol) Fluoranthen (95 %ig) werden in 3800 g Nitrobenzol gelöst und bei 10 bis 15 °C unter Rühren in 5 Stunden mit 180 g (1,12 Mol) Brom in 600 g Nitrobenzol versetzt. Nach beendetem Zutropfen wird 12 Stunden nachgerührt und das Reaktionsgemisch gaschromatographisch analysiert. Zusammensetzung: Fluoranthen 5,3 %, Monobromfluoranthen 87,1 %, Dibromfluoranthen 6,5 % (Flächenprozente). Nach Beendigung der Reaktion wird der bei der Bromierung entstandene Bromwasserstoff mit Stickstoff ausgeblasen, die Reaktionslösung mit 200 g Soda calc., 306 g (0,89 Mol) 1-Amino-4-benzoylaminoanthrachinon (ber. 100 %) und 7 g Kupferoxid versetzt. Die weitere Umsetzung zum Farbstoff erfolgt analog Beispiel 1. Der erhaltene Farbstoff ist in seinen färberischen Eigenschaften mit dem in Beispiel 1 beschriebenen Farbstoff identisch.

## Patentansprüche

1. Küpenfarbstoffe auf der Basis von kondensierten Umsetzungsprodukten von Monobromfluoranthen, das höchstens 7 % Dibromfluoranthen enthält, mit 1-Amino-4-benzoylaminoanthrachinon, die dadurch erhältlich sind, daß man die Kondensation der Umsetzungsprodukte zu den carbazolierten Verbindungen bei 50 bis 70 °C in 83- bis 88 %iger Schwefelsäure vornimmt und nach der Carbazolierung noch bis zu einem Bromgehalt von 20 bis 23 Gew.-% nachbromiert.

2. Küpenfarbstoffe gemäß Anspruch 1, dadurch gekennzeichnet, daß die Kondensation der Umsetzungsprodukte bei ungefähr 60°C in 84 bis 86 gew.%iger Schwefelsäure erfolgt.

## Claims

1. A vat dye based on a condensed reaction product of monobromofluoranthene which contains not more than 7% of dibromofluoranthene with 1-amino-4-benzoylaminoanthraquinone, obtainable by carrying out the condensation of the reaction product to give the carbazole compound at from 50 to 70°C in 83–88% strength sulfuric acid and, after the conversion to the carbazole compound, effecting further bromination to a bromine content of from 20 to 23% by weight.

2. A vat dye as claimed in claim 1, wherein the condensation of the reaction product is carried out at about 60°C in 84–86% strength by weight sulfuric acid.

## Revendications

1. Colorants de cuve à base de produits de réaction condensés du monobromofluoranthène qui contient au plus 7% de dibromofluoranthène, avec la 1-amino-4-benzoylaminoanthraquinone, qui peuvent être obtenus en effectuant la condensation des produits de réaction en dérivés de carbazole à une température de 50 à 70°C dans de l'acide sulfurique à 83–88%, et en bromant encore, après la carbazolisation, jusqu'à une teneur en brome de 20 à 23% en poids.

2. Colorants de cuve selon la revendication 1, caractérisés en ce que la condensation des produits de réaction se fait à environ 60°C dans de l'acide sulfurique à 84–86% en poids.